# EUROPEAN PATENT SPECIFICATION

(11) **EP 3 565 019 B1**
(45) Date of publication and mention of the grant of the patent: **28.01.2026**
(21) Application number: 16925792.0
(22) Date of filing: 29.12.2016
(51) Int. Cl.: H01M 50/126, H01M 50/119, H01M 50/121, H01M 50/133, H01M 50/117, H01M 50/105

(54) **ALUMINUM LAMINATED PACKAGING FILM, AND LITHIUM-ION BATTERY USING SAME**
MIT ALUMINIUM LAMINIERTE VERPACKUNGSFOLIE UND LITHIUM-IONEN-BATTERIE MIT VERWENDUNG DAVON
FILM D'ENCAPSULATION STRATIFIÉ D'ALUMINIUM, ET BATTERIE AU LITHIUM-ION L'UTILISANT

(43) Date of publication of application: 06.11.2019
(73) Proprietor: Beijing Tunghsu Carbon Advanced Materials Technology Co., Ltd., Beijing 100195 (CN); Tunghsu Group Co., Ltd., Beijing 100036 (CN)
(72) Inventor: LI, Qing, Beijing 100195 (CN); LI, Heran, Beijing 100195 (CN); ZHANG, Jing, Beijing 100195 (CN)
(74) Representative: Epping - Hermann - Fischer
(86) International application number: PCT/CN2016/112996
(87) International publication number: WO 2018/119869

(56) References cited:
- CN-A- 103 579 630
- CN-A- 103 779 084
- CN-A- 105 428 556
- CN-A- 105 428 556
- CN-A- 105 958 079
- CN-A- 106 159 316
- CN-U- 205 439 418
- JP-A- 2004 095 333
- KR-B1- 101 661 224
- US-A1- 2014 234 689
- US-A1- 2014 315 083
- LEI WEN ET AL: "Li 4 Ti 5 O 12 on Graphene for High Rate Lithium Ion Batteries", JOURNAL OF THE ELECTROCHEMICAL SOCIETY, vol. 163, no. 14, 1 January 2016 (2016-01-01), pages A2951 - A2955, XP055710731, ISSN: 0013-4651, DOI: 10.1149/2.0571614jes

## Description

### TECHNICAL FIELD

The present disclosure relates to the field of new materials for lithium ion batteries, and in particular, to aluminum laminated packaging films and lithium-ion batteries using the same.

### BACKGROUND

As a green, high-efficiency and portable energy source, lithium-ion battery is widely used in 3C consumer electronic products, electric vehicles, energy storage power stations, etc., and has been recognized as a key development industry in the 13th Five-Year Plan.

Lithium-ion batteries are classified into square batteries, round batteries and flexible packaging batteries according to their shape and packaging. Compared with the former two, the flexible packaging battery has the advantages of flexible shape, high energy density and good safety, but there are also some difficult problems, such as the safety problem caused by the corrosion of the electrolyte on the soft packaging shell.

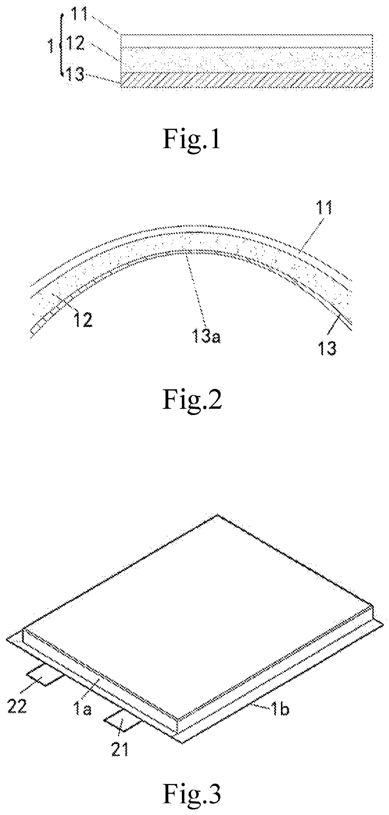

As shown in FIG. 1, the flexible package is also referred to as aluminum laminated packaging film 1. From the perspective of the battery, the aluminum laminated packaging film 1 is composed of a nylon layer 11, an aluminum layer 12 and a sealing layer 13 in the order from outside to inside. The nylon layer 11 is mainly used to form an aesthetically pleasing shape and to prevent oxygen and moisture in the air from entering the interior of the battery. The main function of the aluminum layer 12 is to further prevent the entry of oxygen and moisture in the air, and serve as a skeleton for supporting the outer shape of the aluminum laminated packaging film 1. The innermost sealing layer 13 functions to provide heat sealing adhesion between the two layers of the aluminum laminated packaging film while protecting the aluminum layer 12 from the corrosive action of the electrolyte. The sealing layer 13 has a melting point of 160 °C to 170 °C. Under high temperature and high pressure, the sealing layer 13 of the two-layer aluminum laminated packaging film 1 is melted, and is bonded together after cooling.

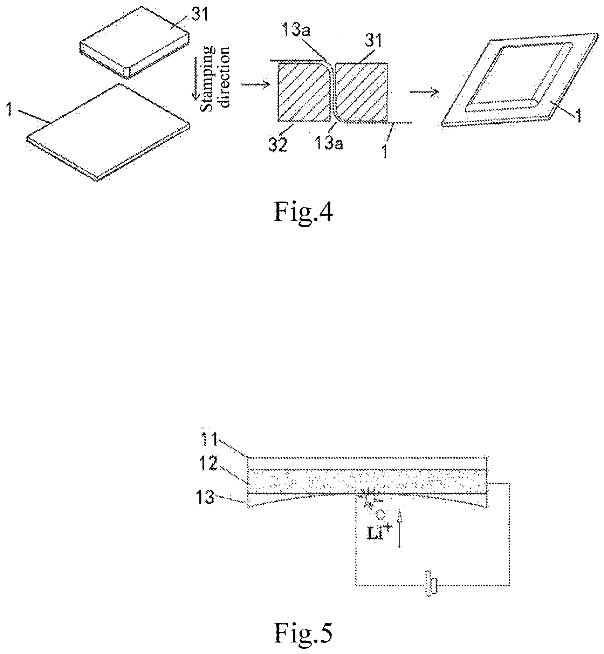

As shown in FIG. 2, the thickness of the sealing layer 13 is about 30 µm. Under the relatively excellent process conditions, after the heat sealing, the thickness of the sealed sealing layer 13 is uniform, and the aluminum layer 12 can be well covered. When the parameters of the heat sealing machine change due to human or equipment factors, such as the heat sealing temperature increases, the heat sealing pressure increases, and the heat sealing time is lengthened, an over-packaging may occur. That is, the layer 13 of the aluminum laminated packaging film corresponding to the heat sealing head position is pressed to become too thin or lost, for example, the portion shown as 13a in Fig. 2 is the weak portion of the sealing layer 13, and the excessively thin polymer at 13a may expose the aluminum layer 12. Fig. 3 shows a schematic view of the battery, and the weak portion 13a of the sealing layer 13 generally appears on the top side heat sealing regions 1a, 1b of the battery 2. In addition, FIG. 4 shows a process in which the aluminum laminated packaging film 1 is processed to form a battery case, the aluminum laminated packaging film 1 is supported on the concave mold 32, and the convex mold 31 is punched down to form a battery case. The bent portion of the aluminum laminated packaging film 1 is the most severely stretched position of the sealing layer 13, that is, the weak portion 13a of the sealing layer 13 in Fig. 4, where the breakage of the sealing layer 13 is most likely to cause the aluminum layer 12 to be exposed. Further, the aluminum layer 12 is directly contacted with the electrolyte. At this time, the trace amount of hydrofluoric acid in the electrolyte will contact the aluminum layer to cause pitting corrosion to fail to prevent water vapor and air and cause the lithium ion battery to swell or leak.

FIG. 5 is a schematic view showing the corrosion of the aluminum laminated packaging film 1 after the sealing layer is broken. When the aluminum layer 12 in the damaged position of the sealing layer 13 is exposed to the internal environment of the battery, that is, the electrolyte, if the metal piece of the negative electrode 21 is in contact with the aluminum layer 12 of the aluminum laminated packaging film 1 at the corresponding position, the aluminum layer 12 in the damaged position of the sealing layer 13 is in contact with the electrolyte to form a loop. That is, the potential of the aluminum layer 12 is the same as that of the negative electrode 21, and at the voltage of the positive and negative electrodes, the lithium ion (Li⁺) in the electrolyte moves toward the aluminum layer 12 to form a loose aluminum-lithium alloy. The aluminum layer 12 is electrochemically etched to accelerate the corrosion degree of the aluminum layer 12. After the aluminum layer 12 is perforated, the external air and moisture will enter the inside of the battery, causing a great safety hazard.
CN 105428556 A discloses a lithium-ion battery comprising an aluminum laminated packaging film that includes an aluminum layer, a graphene-based physical barrier layer combined with adhesive glue, and a sealing layer. The graphene layer in D6 is derived from a precursor slurry with a graphene content of 0.1 to 1 wt%.
US 2014/234689 A1 describes an aluminum laminated packaging film for lithium-ion batteries, comprising multiple layers including an aluminum layer, a graphene-based heat-dissipating adhesive layer, and a sealing layer. The graphene layer includes a polymer matrix and carbon-based materials such as graphene in a concentration of 2 wt% to 8 wt%.

### SUMMARY

It is an object of the present disclosure to provide a lithium ion battery according to claim 1 that solves a problem of internal corrosion of a battery. Preferred embodiments are set forth in the dependent claims.

The graphene layer of the present disclosure is formed by mixing graphene sheets and a polymer glue, and uniformly coating the surface of the aluminum layer, and the graphene layer per unit thickness contains tens of thousands of graphene sheets arranged vertically along the cross section. During the processing of the battery, if the sealing layer is broken, the lithium ions will directly contact the graphene layer. Since the graphene has a sheet structure, the intersecting positions of the irregularly arranged graphene sheets form a tortuous and complicated path. The process of lithium ions leading to the aluminum layer is greatly hindered, thus preventing lithium ions from forming aluminum lithium alloy with aluminum metal and finally avoiding corrosion of aluminum layer.

At the same time, the aluminum laminated packaging film of the present disclosure comprises a graphene layer. Due to the characteristics of the graphene itself, the graphene layer used has good plasticity, and can be well bonded to the aluminum layer to form a standard deformation under the action of an external force. The aluminum laminated packaging film has good toughness, and does not break under the specified deformation range. And it has high thermal stability, and does not melt and decompose below 200 °C, thus ensuring the protection of the aluminum layer.

### BRIEF DESCRIPTION OF THE DRAWINGS

The above and other objects, features and advantages of the present disclosure will become more apparent from detailed description of exemplary embodiments with reference to accompanying drawings.
Fig. 1 is a schematic cross-sectional view of a prior art aluminum-plastic encapsulation film.
Fig. 2 is a schematic cross-sectional view of a prior art aluminum laminated packaging film after stretching.
Fig. 3 is a schematic view of a prior art battery.
Fig. 4 is a schematic view showing a process of processing an aluminum laminated packaging film of the prior art.
Fig. 5 is a schematic view showing the corrosion of the aluminum laminated packaging film after the sealing layer is broken in the prior art.
Fig.6 is a schematic cross-sectional view of a graphene-containing aluminum laminated packaging film of the present disclosure.
Fig.7 is a schematic cross-sectional view showing a corrosion resistance of a graphene-containing aluminum laminated packaging film of the present disclosure.
Fig. 8 is a schematic view of the graphene layer hindering lithium ion corrosion of the aluminum layer.

Reference numerals are list as follows:
1 aluminum laminated packaging film;
1a top side heat sealing area of battery;
1b side heat sealing area of battery;
11 nylon layer;
12 aluminum layer;
13 sealing layer;
13a weak point of sealing layer;
14 graphene layer;
2 battery;
21 positive electrode;
22 negative electrode;
31 convex mold;
32 concave mold;

### DETAILED DESCRIPTION

The present disclosure will be described in detail below in conjunction with specific embodiments.

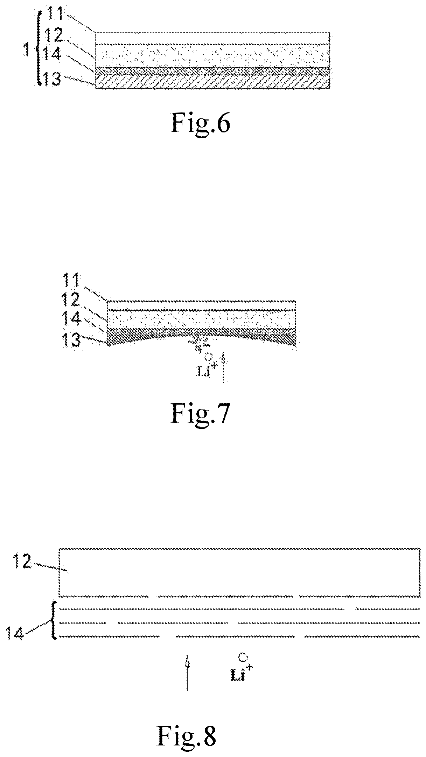

Fig. 6 is a schematic cross-sectional view showing a graphene-containing aluminum laminated packaging film of the present embodiment. The aluminum laminated packaging film 1 includes a nylon layer 11, an aluminum layer 12, a graphene layer 14, and a sealing layer 13 in sequence.

The nylon layer 11 is on the outer side of the packaging material to serve as an outer layer protection which is suitable for cold stamping. Further, according to the appearance of the product, a decorative layer (not shown) such as a matt layer or a dyed coating may be added to the outer surface of the nylon layer 11 to enhance the aesthetic appearance of the product.

The sealing layer 13 is at the innermost side and is in direct contact with the electrolyte and the bare cells. In the present embodiment, the material of the sealing layer 13 may be selected from materials such as polyethylene terephthalate, polyvinyl chloride, polyethylene or polypropylene etc.

The aluminum layer 12 and the graphene layer 14 are between the nylon layer 11 and the sealing layer 13.

The graphene layer 14 is described below. In the present embodiment, the graphene layer 14 may be formed by mixing graphene sheets and a thermoplastic polymer glue, uniformly coating on the surface of the aluminum layer 12, and solidifying. The thermoplastic polymer glue according to the present invention does not chemically react with the electrolyte at the working temperature of the battery, and does not volatilize or decompose. The polymer glues in the following examples are in accordance with the present invention and include aliphatic polyether polyurethanes, thermoplastic polyimide glue, and N,N-ethylene bis-stearamide.

The thickness of the graphene layer 14 is preferably 0.5 to 10 µm, and more preferably 3 to 8 µm.

The graphene content in the graphene layer 14 is preferably from 1 wt% to 10 wt%, more preferably from 2 wt% to 8 wt%.

The graphene monolayer ratio in the graphene layer 14 is preferably 30% by weight or more, and more preferably 60% by weight or more.

The melting point of the graphene layer 14 is preferably 200° C to 400° C, and more preferably 250° C to 350° C.

Fig. 7 is a schematic cross-sectional view showing the corrosion resistance of a graphene-containing aluminum laminated packaging film, and the graphene layer 14 per unit thickness contains tens of thousands of graphene sheets arranged vertically along the cross section. During the processing of the battery, if the sealing layer 13 is broken, the lithium ions and the electrolyte are directly in contact with the graphene layer. Fig. 8 is a schematic view showing that the graphene layer hinders lithium ion corrosion of the aluminum layer. Since the graphene is has a sheet structure, the intersecting positions of the irregularly arranged graphene sheets form a tortuous and complicated path, and the process of lithium ions and electrolytes leading to the aluminum layer 12 is greatly hindered, thus preventing lithium ions from forming an aluminum-lithium alloy with aluminum metal, and finally avoiding electrochemical corrosion and chemical corrosion of the aluminum layer.

### Preparation of aluminum laminated packaging film

The bonding process of the graphene-containing layer 14 and the aluminum layer 12 will be described in detail based on the preparation of a conventional aluminum laminated packaging film.

The preparation of the packaging material included a nylon layer 11, an aluminum layer 12, a graphene layer 14, and a sealing layer 13 from the outer layer to the inner layer. The nylon layer 11 used in the following examples had a thickness of 30 µm, the aluminum layer 12 had a thickness of 40 µm, and the sealing layer 13 was made of polypropylene and had a thickness of 30 µm, which is not described in detail in the following examples. The process in which the graphene layer 14 was formed on the aluminum layer 12 is described in detail below in Examples 1-6.

### Example 1

Using a single layer rate of 50 wt% graphene as a raw material, the graphene raw material and the aliphatic polyether polyurethane, water were sufficiently dispersed in a mass ratio of 4:4:2, and the mixed dispersion was added to a thermoplastic polyimide at a temperature of 300° C. It was kept at a high temperature of 300° C, and was dispersed for 6 hours by a vacuum high-speed shearing machine, and then dispersed by an ultrasonic pulverizer at a working frequency of 50 kHz to 100 kHz for 6 hours, repeating the cycle 5 times, after the first cycle, adding 1% by mass of N,N-ethylene bis-stearamide.

After the high-temperature graphene polymer glue was prepared, it was precisely coated on the aluminum foil using a high-precision coat machine. After coating, it was subjected to 300° C, 250° C, 200° C temperature zone cooling and pressed by a precision roller provided at the end of the coating machine at a roll temperature of 150° C at a roll pressure of 100 to 300 kgf/cm². The graphene layer had a thickness of 8 µm and a grapheme content of 8 wt% after the roll press.

### Example 2

Using a single layer rate of 30 wt% graphene as a raw material, the graphene raw material and the aliphatic polyether polyurethane, water were sufficiently dispersed in a mass ratio of 4:4:2, and the mixed dispersion was added to a thermoplastic polyimide at a temperature of 300° C. It was kept at a high temperature of 300° C, and was dispersed at a high temperature for 6 hours using a vacuum high-speed shearing machine, and then dispersed by an ultrasonic pulverizer at a working frequency of 50 kHz to 100 kHz for 6 hours, repeating the cycle 5 times, after the first cycle, adding 1% by mass of N,N-ethylene bis-stearamide.

After the high-temperature graphene polymer glue was prepared, it was precisely coated on the aluminum foil using a high-precision coat machine. After coating, it was subjected to 300° C, 250° C, 200° C temperature zone cooling and pressed by a precision roller provided at the end of the coating machine at a roll temperature of 150° C at a roll pressure of 100 to 300 kgf/cm². The graphene layer had a thickness of 10 µm and a grapheme content of 5 wt% after the roll press.

### Example 3 (Reference)

Using a single layer rate of 60 wt% graphene as a raw material, the graphene raw material and the aliphatic polyether polyurethane, water were sufficiently dispersed in a mass ratio of 4:4:2, and the mixed dispersion was added to a thermoplastic polyimide at a temperature of 300° C. It was kept at a high temperature of 300° C, and was dispersed for 6 hours by a vacuum high-speed shearing machine, and then dispersed by an ultrasonic pulverizer at a working frequency of 50 kHz to 100 kHz for 6 hours, repeating the cycle 5 times, after the first cycle, adding 1% by mass of N,N-ethylene bis-stearamide.

After the high-temperature graphene polymer glue was prepared, it was precisely coated on the aluminum foil using a high-precision coat machine. After coating, it was subjected to 300° C, 250° C, 200° C temperature zone cooling and pressed by a precision roller provided at the end of the coating machine at a roll temperature of 150° C at a roll pressure of 100 to 300 kgf/cm². The graphene layer had a thickness of 3 µm and a grapheme content of 1 wt% after the roll press.

### Example 4

Using a single layer rate of 95 wt% graphene as a raw material, the graphene raw material and the aliphatic polyether polyurethane, water were sufficiently dispersed in a mass ratio of 4:4:2, and the mixed dispersion was added to a thermoplastic polyimide at a temperature of 300° C. It was kept at a high temperature of 300° C, and was dispersed for 6 hours by a vacuum high-speed shearing machine, and then dispersed by an ultrasonic pulverizer at a working frequency of 50 kHz to 100 kHz for 6 hours, repeating the cycle 5 times, after the first cycle, adding 1% by mass of N,N-ethylene bis-stearamide.

After the high-temperature graphene polymer glue was prepared, it was precisely coated on the aluminum foil using a high-precision coat machine. After coating, it was subjected to 300° C, 250° C, 200° C temperature zone cooling and pressed by a precision roller provided at the end of the coating machine at a roll temperature of 150° C at a roll pressure of 100 to 300 kgf/cm². The graphene layer had a thickness of 2 µm and a grapheme content of 7 wt% after the roll press.

### Example 5 (Reference)

Using a single layer rate of 80 wt% graphene as a raw material, the graphene raw material and the aliphatic polyether polyurethane, water were sufficiently dispersed in a mass ratio of 4:4:2, and the mixed dispersion was added to a thermoplastic polyimide at a temperature of 300° C. It was kept at a high temperature of 300° C, and was dispersed for 6 hours by a vacuum high-speed shearing machine, and then dispersed by an ultrasonic pulverizer at a working frequency of 50 kHz to 100 kHz for 6 hours, repeating the cycle 5 times, after the first cycle, adding 1% by mass of N,N-ethylene bis-stearamide.

After the high-temperature graphene polymer glue was prepared, it was precisely coated on the aluminum foil using a high-precision coat machine. After coating, it was subjected to 300° C, 250° C, 200° C temperature zone cooling and pressed by a precision roller provided at the end of the coating machine at a roll temperature of 150° C at a roll pressure of 100 to 300 kgf/cm². The graphene layer had a thickness of 0.5 µm and a grapheme content of 10 wt% after the roll press.

### Example 6

Using a single layer rate of 70 wt% graphene as a raw material, the graphene raw material and the aliphatic polyether polyurethane, water were sufficiently dispersed in a mass ratio of 4:4:2, and the mixed dispersion was added to a thermoplastic polyimide at a temperature of 300° C. It was kept at a high temperature of 300° C, and was dispersed for 6 hours by a vacuum high-speed shearing machine, and then dispersed by an ultrasonic pulverizer at a working frequency of 50 kHz to 100 kHz for 6 hours, repeating the cycle 5 times, after the first cycle, adding 1% by mass of N,N-ethylene bis-stearamide.

After the high-temperature graphene polymer glue was prepared, it was precisely coated on the aluminum foil using a high-precision coat machine. After coating, it was subjected to 300° C, 250° C, 200° C temperature zone cooling and pressed by a precision roller provided at the end of the coating machine at a roll temperature of 150° C at a roll pressure of 100 to 300 kgf/cm². The graphene layer had a thickness of 6 µm and a grapheme content of 2 wt% after the roll press.

### Preparation of lithium ion battery

### 1) Preparation of positive electrode sheet

A positive electrode active material, conductive carbon black Super-P as a conductive agent, and a binder were uniformly dispersed in a solvent to prepare a positive electrode slurry. The positive electrode slurry was uniformly coated on the positive current collector. Then, a positive electrode sheet was obtained by stoving, cold pressing, trimming, cutting, slitting, drying, and welding electrode ears in turn.

### 2) Preparation of negative electrode sheet

A negative electrode active material artificial graphite, conductive carbon black Super-P as a conductive agent, a thickener, and a binder were uniformly mixed in deionized water to prepare a negative electrode slurry. The negative electrode slurry was uniformly coated on the negative current collector. Then, a negative electrode sheet was obtained by stoving, cold pressing, trimming, cutting, slitting, drying, and welding electrode ears in turn.

### 3) Preparation of separator

A polypropylene film was used as a separator.

### 4) Preparation of lithium ion battery

The positive electrode sheet, the separator, and the negative electrode sheet were sequentially stacked upon one another, and then wound to form a bare cell. The bare cell was placed in a case formed by any of the aluminum laminated packaging films prepared in Example 1-6, and an electrolyte was injected. After vacuum-package and maintaining for 24 h, it was charged to 4.4 V with a constant current of 0.1 C, and then charged with 4.4. V constant voltage until the current drops to 0.05 C, then discharged to 3.0 V with a constant current of 0.1 C, repeating the charge and discharge cycle twice, and finally charged to 3.8 V with a constant current of 0.1 C, thereby completing the preparation of a lithium ion battery. The cases prepared in Examples 1-6 were used to form the lithium ion batteries of Examples 7-12, respectively.

### Comparative example 1

The case of the lithium ion battery was the same as the case prepared in any one of examples 1-6 except that the graphene layer was not contained.

### Accelerated corrosion test

The negative electrode ear of the fully charged lithium ion battery is short-circuited with the packaging film by the metal wire of to form an electron channel. Then the battery prepared in Example 7-12 was stored at 40-50° C at the relative humidity of >90%, and the battery case checked for chemical corrosion regularly. The test results were shown in Table 1.

**Table 1**

| No. | Accelerated corrosion test (number of corrosions occurring in 3 months / total number of tests) |
|---|---|
| Example 7 | 0/100 |
| Example 8 | 0/100 |
| Example 9 | 0/100 |
| Example 10 | 0/100 |
| Example 11 | 0/100 |
| Example 12 | 0/100 |
| Comparative example 1 | 5/100 |

The lithium-ion batteries using the aluminum laminated packaging films prepared in Examples 1-6, have an obviously improved anti-hydrofluoric acid ability, and the lithium alloy is not easily formed, and even when the negative electrode and the packaging material are short-circuited, lithium is not precipitated. Therefore, it can better resistance to electrochemical corrosion, enhance the safety and increase the service life of lithium-ion batteries. It also improves the resistance to penetration of lithium-ion batteries.

## Claims

1. A lithium-ion battery (2), comprising an aluminum laminated packaging film (1) as a soft packaging shell, wherein the aluminum laminated packaging film (1) consists of an aluminum layer (12), a graphene layer (14), and a sealing layer (13) in sequence, and the graphene layer (14) comprises graphene sheets and polymer glue; wherein the polymer glue comprises aliphatic polyether polyurethanes, thermoplastic polyimide glue, or N,N-ethylene bis-stearamide; wherein the grapheme content in the graphene layer (14) is from 2 wt% to 8 wt%.

2. The lithium-ion battery (2) according to claim 1, wherein the graphene layer (14) has a thickness of 0.5 µm to 10 µm.

3. The lithium-ion battery (2) according to claim 2, wherein the graphene layer (14) has a thickness of 2 µm to 8 µm.

## Patentansprüche

1. Lithium-Ionen-Batterie (2), die eine laminierte Aluminiumverpackungsfolie (1) als weiche Verpackungshülle umfasst, wobei die laminierte Aluminiumverpackungsfolie (1) aus einer Aluminiumschicht (12), einer Graphenschicht (14) und einer Versiegelungsschicht (13) in dieser Reihenfolge besteht und die Graphenschicht (14) Graphenblätter und Polymerkleber umfasst;
wobei der Polymerkleber aliphatische Polyetherpolyurethane, thermoplastischen Polyimidkleber oder N,N-Ethylenbisstearamid umfasst;
wobei der Graphenanteil in der Graphenschicht (14) zwischen 2 Gew.-% und 8 Gew.-% liegt.

2. Lithium-Ionen-Batterie (2) gemäß Anspruch 1, wobei die Graphenschicht (14) eine Dicke von 0,5 µm bis 10 µm aufweist.

3. Lithium-Ionen-Batterie (2) gemäß Anspruch 2, wobei die Graphenschicht (14) eine Dicke von 2 µm bis 8 µm aufweist.

## Revendications

1. Une batterie lithium-ion (2) comprenant un film d'emballage laminé en aluminium (1) servant de coque d'emballage douce, dans laquelle le film d'emballage laminé en aluminium (1) se compose d'une couche d'aluminium (12), d'une couche de graphène (14) et d'une couche d'étanchéité (13) disposées dans cet ordre, et la couche de graphène (14) comprend des feuilles de graphène et de la glue polymère;
dans laquelle la glue polymère comprend des polyéthers polyuréthanes aliphatiques, de la glue polyimide thermoplastique ou du N,N-éthylène bis-stéaramide ;
dans laquelle la quantité de graphène dans la couche de graphène (14) est comprise entre 2 % et 8 % en poids.

2. La batterie lithium-ion (2) selon la revendication 1, dans laquelle la couche de graphène (14) a une épaisseur comprise entre 0,5 µm et 10 µm.

3. La batterie lithium-ion (2) selon la revendication 2, dans laquelle la couche de graphène (14) a une épaisseur comprise entre 2 µm et 8 µm.
